# EUROPEAN PATENT SPECIFICATION

(11) **EP 1 061 006 B1**
(45) Date of publication and mention of the grant of the patent: **13.08.2008**
(21) Application number: 00202121.0
(22) Date of filing: 16.06.2000
(51) Int. Cl.: B65D 83/14, A23P 1/16, A23C 9/152

(54) **Aerosol system for cream or an aerated dessert**
Aerosolsystem für lufthaltige Dessertprodukte
Système aérosol pour des dessert aéré

(30) Priority: 16.06.1999 NL 1012351
(43) Date of publication of application: 20.12.2000
(73) Proprietor: Friesland Brands B.V., 7943 PE Meppel (NL)
(72) Inventor: Clauwert, Werner, 1702 Groot Bijgaarden (BE); Spelmans, Luc, 3800 Sint-Truiden (BE); Custinne, Marc Jacques Christian Maurice, 4845 Jalhay (BE); Knuts, Heidi, 3590 Diepenbeek (BE)
(74) Representative: Prins, Adrianus Willem

(56) References cited:
- EP-A- 0 747 301
- EP-A- 0 777 969
- EP-A- 0 816 254
- US-A- 3 677 443
- US-A- 3 896 970
- US-A- 4 685 597

## Description

The invention relates to an aerosol system for metering cream or an aerated dessert and the like.

Aerosol systems for dispensing whipping cream or a product resembling whipped cream, which product will in this specification and the appended claims be further referred to as "spray cream", such as they are commercially available, are characterized by a can filled with a cream composition and a gas. The function of this gas is twofold. On the one hand, it functions as a propellant; on the other, it functions as a blowing agent. The blowing agent dissolves at least partially in the cream composition. Because the blowing agent and the cream composition are present in the aerosol can under raised pressure, the propellant will, when the product is being sprayed, expand, so that bubbles will grow in the cream composition in which it has dissolved, which results in an "aerated" product.

The amount of gas that is dissolved in the cream composition is - in combination with the pressure in the aerosol can - determinative for the so-called overrun. By "overrun" is meant the relative increase of volume of the sprayed product compared with the volume of the cream composition in the aerosol can. An overrun of 100% corresponds to an increase of volume by a factor two.

The twofold function of the gas present in conventional aerosol cans for spray cream entails a number of drawbacks. For instance, the initial pressure of the propellant must be sufficiently high to enable emptying the aerosol can sufficiently. On the other hand, this pressure must not be too high, because in that case, the product will sputter badly, certainly at the first meterings.

Moreover, an unduly high pressure of the blowing agent involves the solution of a relatively large amount of the propellant in the cream composition present in the aerosol can, resulting in an overrun which is unacceptably high. Thus, the desired mouth feel is lost.

In addition, the overrun of the cream composition to be metered strongly depends on the remaining amount of gas in the aerosol can. The overrun is far from constant and can change, and in particular decrease, during the period of use of the aerosol can.

In the prior art, it has been proposed to overcome a number of the problems outlined by using a gas mixture consisting of two types of gas having different functions. One type comprises a gas which dissolves poorly, if at all, in the product and substantially fulfills the propelling function (the propellant constituent), the other type dissolves in the product and should guarantee the desired overrun (the blowing agent constituent). Such information can, for instance, be found in European patent application 0 747 301, in which, moreover, cream compositions are mentioned that are suitable for use in the present invention.

Also if a gas mixture consisting of several constituents is used, the total initial pressure (i.e., the pressure in the aerosol can before use) should not be too high, because this may cause an unduly fast outflow of the product during spraying, which may inter alia be accompanied by sputtering and may lead to an unstable or otherwise unacceptable product. As a matter of fact, for safety reasons, the maximally allowable pressure in aerosol cans is moreover limited to 12 bar at a temperature of 50°C.

For the above reasons, the initial pressure in the aerosol can cannot be too high.

However, too low an initial pressure in aerosol cans for spray cream has the drawback that a portion of the cream cannot be sprayed. Due to the spraying of the product, the pressure in the aerosol can drops and is eventually not high enough to empty the aerosol can completely, or at least to an economically suitable amount. This last aspect is expressed in the spraying percentage, defined as the weight of all the sprayed product relative to the original weight of the cream composition in the can before spraying. A spraying percentage of 100% corresponds to a completely emptied can. However, spraying percentages of at least 95%, preferably at least 97%, yet most preferably more than 98% would already mean a great step forwards for spray cream and aerated desserts.

As follows from Comparative Example 5 below, a conventional aerosol system with a low-viscosity filling already yields residual percentages of more than 5%.

Moreover, also when gas mixtures in conventional types of aerosol cans are applied, during use, the amount of blowing agent decreases with the total pressure in the aerosol can, so that the overrun of the sprayed product will change during the period of use.

As stated, in conventional aerosol systems, it is not properly possible to obtain a sufficiently high spraying percentage with genuine whipping cream. By "genuine whipping cream" is meant a cream which can be entirely prepared from milk constituents.

Whole milk consists for 90 wt.% of skimmed milk and for 10 wt.% of cream. By for instance centrifuging, the cream fraction can be separated from the skimmed milk, possibly with a portion of non-fat milk, and after that be used, inter alia, for the preparation of whipping cream. Whipping cream has a fat content of at least 36 wt.%. This fat is termed "milk fat".

The firmness of genuine whipping cream results from the so-called "buttering" of the cream. For obtaining the desired firmness, a certain degree of buttering is required. When whipping cream is whipped manually or by mixer, or in other foaming systems intended for whipping, there is time to form a stable system through the buildup of a crystal network. In the case of whipping cream, the formation of that crystal network is referred to as "buttering". However, the degree of buttering required for genuine whipping cream results in a composition which is too firm for being sprayed to a sufficient degree in a conventional aerosol can. Consequently, the conventional can filled with this cream composition cannot be sprayed out or only to an insufficient degree, in other words: the spraying percentage is too low. To overcome this problem, the cream composition in a conventional can should undergo treatments or modifications in composition, for instance by supplying additives, which are so drastic that it is often no longer possible to speak of a genuine whipping cream.

Generally, with conventional aerosol cans, it has not proved to be possible to spray out cream compositions or aerated desserts with on the one hand a sufficiently high spraying percentage (influenced by, inter alia, the viscosity of the cream composition, dimensions of the spray nozzle, (initial) pressure of the propellant, presence of other additives), and on the other a stand, form and mouth feel of the product (in addition to the above-mentioned factors co-determined by, for instance, the amount of blowing agent) which is comparable with a mechanically whipped cream.

Spray cream obtained from conventional aerosol cans differs, and often even to a high degree, from "genuine" whipped whipping cream.

Here, by "genuine whipped whipping cream" is meant whipping cream which is, for instance, whipped by a rod or by a(n electric) mixer, but also whipping cream from an automatic whipping apparatus, such as, for instance, a Sanomat® cream whipping apparatus or a Hobart® planetary mixer.

In more detail, in conventional aerosol cans, in view of the problems involved in the spraying of genuine whipping cream, there is often used a product which resembles whipping cream to a higher or lesser degree, for instance a so-called topping. Usually, such a topping is composed on the basis of proteins and contains, in addition, for instance coco fat and emulsifiers. For use in conventional aerosol cans, recombined cream products are used as well. In a recombined cream, the animal fats have been (partially) replaced by vegetable fats, for instance in order to increase the spraying percentage. Usually, the taste and/or mouth feel of such products cannot stand comparison with whipping cream.

One of the objects of the present invention is to provide an aerosol system which can spray whipping cream which, as far as firmness, stand, overrun and mouth feel are concerned, is comparable with genuine whipping cream. As genuine whipping cream, the whipping cream obtained with a Sanomat® whipping cream apparatus is referred to in this specification and the appended claims.

An important cause for the deviant mouth feel of known spray creams obtained from conventional aerosol cans is that the overrun of the product from the conventional aerosol can is (too) high; this overrun is approximately 400-600%. This is caused by the amounts of blowing agent/propellant in the conventional aerosol can, which amounts should be large enough to enable emptying the aerosol can to an acceptable degree. The increase of the contribution of insoluble propellant in the combination blowing agent/propellant may have the undesired consequence that the can loses the propellant easily, while no product is being sprayed, for instance due to improper handling of the can. In addition, there remains the problem that during use, the pressure of the combination blowing agent/propellant decreases, causing the overrun of the product, depending on the can content, to change, and in particular decrease, substantially during use, which is undesirable.

Because of their composition, the toppings and recombined cream compositions mentioned are often not stable; they sag within a few minutes: the so-called "stand" of the product is little acceptable. For toppings and recombined cream compositions sprayed by conventional aerosol cans, at a period longer than, for instance, half an hour at room temperature, the stand is generally insufficient.

According to the invention, the problems outlined can be solved and an improved whipped cream or product resembling whipped cream or an aerated dessert can be metered from an aerosol system. It has been found that the above problems are solved by an aerosol system with spray cream or an aerated dessert, comprising an aerosol can having at least two compartments (A) and (B), which compartments are gastightly separated from each other by an at least partially movable wall, while in compartment (A) a propellant is present and in compartment (B) a cream or dessert composition is present comprising a blowing agent which is at least partially incorporated into said cream composition, compartment (B) being provided with a metering valve.

With the aerosol system according to the invention, a spray cream product or aerated dessert can be obtained which, as far as firmness, stability and mouth feel are concerned, bears strong resemblance to genuine whipped cream (such as, for instance, obtained with a Sanomat® apparatus). Moreover, the aerosol system according to the invention has a high spraying percentage. During spraying of the spray cream with the aerosol system according to invention, the cream does not sputter.

Apart from obtaining whipped cream or a product resembling whipped cream, the aerosol system according to the invention can very suitably be used for products which, as far as consistency is concerned, are comparable with whipped cream but which are different in taste, for instance particular types of desserts. Thus, according to the invention, it is possible to add, for instance, fragrances, coloring and/or flavoring substances to the cream composition in the can, without changing the essence of the invention. In this manner, airy desserts can for instance be made very well, by supplying the suitable additives, such as an aroma, to a cream composition. Hence, wherever "spray cream", "whipped cream" and "the product" are mentioned in this text, it should also be understood to include such airy dessert. Generally, "spray cream" or "cream composition" refers to the composition in the aerosol can and "whipped cream" refers to the sprayed product.

In addition, according to the invention, a product is obtained whose overrun of the first meterings relative to the last meterings is substantially constant.

As a matter of fact, aerosol systems comprising two compartments are known *per se*. For instance, US Patent 4,685,597 teaches an aerosol can in which the product-containing compartment is separate from the propellant-containing compartment. However, no products are described that involve the problems pertaining to a whipping cream, a product resembling whipping cream or an airy dessert: the aerating or gassing during metering, with the product having a consistency other than in the bottle, in particular due to the overrun, but being nevertheless stable. In view of this, it is observed that in the US patent, reference is made to cream that is already whipped and may be present as filling.

Further, US Patent 3,896,970 teaches an aerosol system in which a propellant-containing product is in fact metered. However, the products to be metered are cosmetic oil-in-water emulsions such as hair-coloring foams, which do not involve the problems pertaining to a cream or airy dessert product which requires a considerably longer stability obtained through the formation of a crystal network.

As stated, the aerosol system according to the invention is particularly suitable for obtaining a product resembling genuine whipping cream. To improve the properties in respect of the spraying percentage and overrun, it has moreover been found that a destabilizing step - which is in fact customary for cream to be whipped in a conventional manner - applied to the cream composition with which a can is filled up in the aerosol system according to the invention, leads to very good results. Without wishing to be bound to any theory, the stiffening of whipping cream is based upon a mechanism wherein the membranes around the fat globules that are present in the cream composition become slightly damaged through whipping or shearing stresses applied otherwise. As a result, the globules will start to coalesce. This process is referred to as "buttering". Moreover, through whipping or spraying, air or another gas is driven into the cream. These gas bubbles are stabilized by a layer of fat and/or a protein layer on the outside. This imparts the desired firmness to the whipping cream. The other properties, such as mouth feel, are closely related to the amount of gas present in the whipping cream and, in aerosol cans, are determined to a significant extent by the overrun. By destabilizing the cream in the aerosol can, according to the invention, it is possible to impart already some degree of buttering to the product in the aerosol can, at least the cream can already be slightly activated, to the effect that as a result of the spraying operation, the shearing stresses provided through spraying impart precisely the right degree of buttering to the cream composition, to obtain a product having a desired overrun and a high spraying percentage of more than 95%, preferably more than 97% and most preferably more than 98%.

Whereas in conventional aerosol cans, the product to be metered leads to a spraying percentage of over 90% only at viscosities below 300 cP, the use of the aerosol system according to the invention enables metering recipes whose viscosity may also range between 300 and about 2000 cP.

Although buttering plays an important part in the aerosol systems according to the invention, it is not properly possible, as a skilled person knows, to lay down the buttering degree or the degree of destabilization in a number or to objectify it otherwise. For this reason, a suitable buttering degree and a suitable degree of destabilization are defined on the basis of the desired product properties. After that, with the possibilities available and partly in the light of the following description and Examples, it is within the scope of a skilled person to generate suitable cream compositions.

By setting the correct buttering degree through destabilization of the cream composition in the aerosol can, it is possible to obtain a product which can be sprayed for at least 95%, preferably at least 97%, and most preferably at least 98%, to obtain a sprayed product having an overrun of at least 80% and at the most approximately 300% and a good mouth feel.

The destabilization should not be carried out too far, because otherwise the buttering advances too far, as a result of which the product becomes too stiff and can no longer be sprayed properly.

An overrun of at least 80% is needed to obtain a good mouth feel. On the other hand, the overrun should not be much higher than 300%, preferably not higher than 200%, because the product will then become too airy, which is also at the expense of the mouth feel, at least when a product resembling whipping cream is aimed at. By selecting a suitable degree of destabilization, the buttering degree can be set so that at a suitable combination of on the one hand amount and type of blowing agent, and on the other factors such as embodiment of the aerosol can and dimensions of, for instance, the nozzle, a cream product having the desired overrun, a good stand and a good mouth feel can be obtained.

By "good mouth feel" is meant a mouth feel which is comparable with the mouth feel of whipping cream obtained by the above-mentioned Sanomat® cream whipping apparatus.

As mentioned, by setting the proper buttering degree or, in other words, by sufficiently activating the cream composition through destabilization of the cream composition in the aerosol can, it is moreover possible to obtain a product which maintains a good stand for half an hour at atmospheric pressure and at a temperature of about 4-8°C and exhibits a slight serum loss after half an hour.

The destabilization should be performed so that the buttering degree is such that when the sprayed blob of whipping cream is stored in a refrigerator, *i.e*. at a temperature which is normally about 4-8°C, it has not sagged visibly after half an hour.

The serum or milk serum is the aqueous phase in the product. Separation thereof causes an undesired gloss on the product. By "slight serum loss" is meant that after half an hour, the sprayed blob of cream still does not exhibit any serum separation.

Preferably, the wall mentioned between the compartments (A) and (B) is a piston, or is formed by a flexible and/or elastic diaphragm.

A practical embodiment of the aerosol system according to the invention is, for instance, an aerosol can of the so-called bag-in-can type, wherein compartment (A) is partly formed by the space enclosed by a bag, also referred to as pouch. Such a pouch is manufactured from flexible and/or elastic material, for instance a laminate, the outside of which consists, for instance, of PET, with a layer of aluminum therebelow, with a subjacent layer of nylon on a polypropylene sublayer.

Another practical embodiment of the bag-in-can type is the embodiment wherein compartment (A) is partly formed by the space enclosed by the wall of the aerosol can and compartment (B) is partly formed by the space enclosed by a pouch.

A third possible practical embodiment is an aerosol system of the so-called piston type wherein compartment (A) is formed by the space enclosed by the wall of the aerosol can and one side of said piston.

The blowing agent in compartment (B) should be at least partially soluble in the cream composition. Suitable blowing agents comprise CO₂, N₂O or mixtures thereof, possibly in combination with air and/or N₂.

To all embodiments, it applies that through the use of the aerosol system according to the invention, the amount of blowing agent in the cream composition is and can be lower than in conventional aerosol cans. The amount of blowing agent in compartment (B) is at the most 1.5 wt.% calculated on the total amount of cream composition and preferably ranges between 0.1 and 1 wt.%.

To achieve a spraying percentage of 95% or more, which is considerably higher than is found for known aerosol systems, and to obtain the other advantages mentioned, the initial pressure in compartment (A) should be greater than 5 bar. Preferably, the initial pressure in compartment (A) is greater than 8 bar.

Apart from a high spraying percentage, the aerosol system according to the invention has the property that the pressure of the propellant is independent of the amount of blowing agent and *vice versa*. The effect thus achieved is that the overrun of the sprayed product hardly changes during the period of use, i.e. a product is sprayed which is to a high degree constant in terms of composition and product properties.

In the aerosol system according to the invention, means are present for introducing the propellant into compartment (A). These means may, for instance, comprise a valve extending to the outside of the aerosol can, through which the propellant is injected.

It is also possible to generate the propellant *in situ*, for instance by carrying out a chemical reaction in compartment (A). An example of such system wherein the propellant is generated *in situ* by a chemical reaction is the so-called self-pressure-bag system. This can for instance be effected by the reaction between a carbonate salt, for instance sodium carbonate, and an acid solution, for instance citric acid solution, from which reaction CO₂ is obtained. In this system, the two reagents are contained in separate pieces of foil, while the foil around the carbonate salt can be dissolved by the acid solution. These pieces of foil are together located separately in the same pouch which forms compartment (A) or is provided therein. According to this system, the foil around the acid solution is broken by pressing or tearing, whereupon the pouch with the two reagents is directly transferred into the aerosol can, which is closed off from the atmosphere. Meanwhile, the citric acid solution has dissolved the soluble foil around the sodium carbonate or will do so, and enter into a reaction therewith, involving the release of CO₂. Accordingly, pressure is built up. By choosing the amounts of reagents, the eventual pressure can be determined.

The cream or dessert composition (B) has preferably undergone a destabilizing treatment. Such treatment can comprise a temperature treatment, addition of a suitable stabilizer and/or addition of a suitable emulsifier. Through this treatment, the spraying properties of the product will improve.

After the atmosphere has been closed off and blowing agent has been added (gassing), the cream composition comprises at least a fat, preferably milk fat, non-fat milk constituents and a blowing agent in an amount which is at the most 1.5 wt.% of the amount of cream composition.

The fat fraction in the cream composition can consist at least partially of vegetable fats. Such recombined cream is also suitable for being sprayed with the aerosol system according to the invention. For recombined cream, suitable fats are fats which are solid at refrigerator temperature, i.e. a temperature of about 4-8°C, such as coco fat.

The properties of the spray cream obtained with the aerosol system according to the invention, which properties are improved relative to the conventional spray cream, are partly realized through the use of an improved cream composition in the can, which cream composition is difficult or impossible to use in conventional aerosol cans. As mentioned, these improvements are realized through destabilization of a cream composition involving buttering of the cream composition. In known aerosol systems, when the cream composition is destabilized, buttering already takes place in the can, as a result of which it can no longer be emptied or only to an insufficient extent. The above is illustrated at length in the following Examples.

If so desired, the cream composition may also have undergone, before filling up, a pasteurizing treatment and/or a sterilizing treatment, for instance a UHT treatment.

The destabilization of the cream may inter alia be effected through one or more of the following measures, known per se:
i. By adding emulsifiers to the cream composition, to promote the formation of a finer emulsion, which moreover imparts a better mouth feel to the sprayed product.
ii. By using stabilizers which improve the mouth feel and prevent serum separation and serum loss of the sprayed product.
iii. By adding an acid, for instance lactic acid or citric acid, the pH can be lowered, so that the firmness of the product can be controlled. Also, the optimal homogenization temperature and pressure can be adjusted through the addition of, for instance, lactic acid.
iv. By using different vegetable and/or animal fats, the sprayed product can be rendered firmer.
vi. By homogenizing, smaller fat globules can be obtained, so that the sprayed product has a better mouth feel. This homogenizing may take place in one or more steps, while the composition is subjected to increased pressure and/or temperature.

Through a combination of propellants such as N₂O, CO₂ and N₂, the overrun can be set.

A cream composition having a viscosity of 5 Pa.s or higher can well be sprayed by the aerosol system according to the invention.

Suitable stabilizers are compositions based on carrageen, for instance carrageenan, starch, xanthan gum, alginate, guar, gelatin, but other stabilizers known to a skilled person can also be used successfully in the invention.

Suitable emulsifiers are, for instance, mono- and diglycerides (E471) and combinations thereof. Other emulsifiers known to a skilled person can also be used successfully in the invention.

In addition to the above-mentioned compositions, the cream composition can further comprise one or more of the following ingredients: animal fat, vegetable fat, such as, for instance, coco fat, sugar, fragrances, coloring and/or flavoring substances.

The invention is hence further characterized by the use of the above-mentioned, improved cream composition in an aerosol system as described hereinabove to obtain a stable cream product which, at room temperature and atmospheric pressure, has a stand of more than 1 hour and/or an overrun of less than 300%.

An aerosol system according to the invention is prepared by performing the following steps:
a) preparing a cream or dessert composition comprising at least a fat, which is preferably cream, and non-fat milk constituents, and optionally one or more suitable stabilizers and/or emulsifiers,
b) optionally subjecting said cream composition to a temperature treatment,
c) homogenizing said cream composition,
d) filling one of the compartments of an aerosol can as mentioned hereinabove with an appropriate amount of the cream composition,
e) introducing into the cream or dessert composition a blowing agent in an amount which is at the most 1.5 wt.% of the amount of cream or dessert composition,
f) filling a compartment of said aerosol can other than the compartment mentioned with a propellant;
wherein steps d) + e) and f) can be performed in random order.

Steps d) + e) can also be combined, for instance by injecting the cream composition under pressure of the blowing agent. The order of steps d) + e) and f) is not critical and usually depends on the type of aerosol can that is used. For instance, for preparing an aerosol system of the bag-in-can type wherein the propellant is present in the pouch, the final steps are preferably performed in the order d), e), f). For preparing an aerosol system of the bag-in-can type wherein the cream composition is present in the pouch, the final steps are preferably performed in the order f), d), e). For preparing an aerosol system of the piston type, the final steps are performed in the order d), e), f).

Hence, the aerosol system according to the invention can be used for obtaining a stable cream product having one or more of the following properties, measured at room temperature and atmospheric pressure: a stand of more than 1 hour, an overrun of less than 300% and/or an emptying percentage of more than 90%. Through the use of a suitable cream composition, a sprayed whipping cream can be obtained with the aerosol system according to the invention which, as far as firmness, stability and mouth feel are concerned, bears strong resemblance to genuine whipping cream as obtained from an automatic whipping apparatus.

The invention will now be specified on the basis of a number of Examples which are not intended to limit the invention. Wherever percentages are mentioned, these percentages are calculated on the weight of the total composition, unless indicated otherwise.

### Example 1

A cream composition having a fat content of 40% was made from milk. To this, cream, sugar and carrageen were added, to obtain a cream composition having the following composition:

| | |
|---|---|
| cream (40%) | 80% |
| skimmed milk | 9.92% |
| sugar | 10% |
| carrageen | 0.08% |

Next, the cream composition was sterilized by a UHT treatment, after which the cream composition was cooled to 10°C and introduced aseptically in an appropriate amount into one of the two compartments of an aerosol can of the piston type. This compartment containing the cream composition was gassed with N₂O in an amount corresponding to 3.5 g of N₂O/600 ml of cream composition. Next, in the other compartment, propellant was fed to a pressure of 6 bar and the aerosol system was cooled to 5°C.

After spraying, the overrun of the spray cream was 165%. The spray cream had a full mouth feel and a very good firmness. The emptying percentage of the aerosol can was more than 90%.

### Reference Example 1

The same cream composition as in Example 1 was transferred into a conventional aerosol can. Propellant was added until the pressure was 12 bar. The other steps proceeded as in Example 1.

The cream composition was difficult to spray. The emptying percentage was less than 60%.

### Example 2

A cream composition having a fat content of 40% was made from milk. To this, skimmed milk was added, to lower the fat content to 25%. To this, 1.5% of starch was added. The cream composition was sterilized via UHT treatment and cooled to 70°C. After this, the cream composition was homogenized in two steps: first at 50 bar and then at 10 bar. The cream composition was then cooled to 10°C and introduced aseptically in an appropriate amount into one of the two compartments of an aerosol can of the piston type. This compartment containing the cream composition was gassed with N₂O in an amount corresponding to 5 g of N₂O/600 ml. Next, in the other compartment, propellant was fed to a pressure of 8 bar and the aerosol system was cooled to 5°C.

After spraying, the overrun of the spray cream was 250%. The spray cream had a full mouth feel and a very good firmness. The emptying percentage of the aerosol can was more than 90%.

### Reference Example 2

The same cream composition as in Example 2 was transferred into a conventional aerosol can. Propellant was added until the pressure was 12 bar. The other steps proceeded as in Example 2.

The cream composition was difficult to spray. The emptying percentage was less than 55%.

### Example 3

A cream composition having a fat content of 15% was made by adding a mixture of milk fat and hardened coco fat to skimmed milk. To this, emulsifier (E471) and stabilizer were added, to obtain a cream composition having the following composition:

| | |
|---|---|
| milk fat | 15% |
| coco fat | 15% |
| emulsifier | 0.5% |
| stabilizer | 0.015% |
| skimmed milk | 69.485% |

The cream composition was heated up to 60°C and then homogenized at 30 bar and 70°C. After this, the cream composition was sterilized via UHT treatment and cooled to 70°C. After this, the cream composition was homogenized in two steps: first at 40 bar and then at 10 bar. Next, the cream composition was cooled to 10°C and introduced aseptically in an appropriate amount into one of the two compartments of an aerosol can of the piston type. This compartment containing the cream composition was gassed with N₂O in an amount corresponding to 5 g of N₂O/600 ml. Next, into the other compartment, propellant was fed to a pressure of 8 bar, and the aerosol system was cooled to 5°C.

After spraying, the overrun of the spray cream was 240%. The spray cream had a very good firmness. The emptying percentage of the aerosol can was more than 90%.

### Reference Example 3

The same cream composition as in Example 3 was transferred into a conventional aerosol can. Propellant was added until the pressure was 12 bar. The other steps proceeded as in Example 3.

At the initial pressure mentioned, the product could not be sprayed. For spraying this product, a significantly higher pressure would be required. However, the legally established maximum pressure in the aerosol cans is 12 bar at 50°C.

### Example 4

An airy dessert was prepared according to the composition of Example 1, with the difference that 0.5% of the cream was replaced by chocolate aroma, so that the composition was as follows:

| | |
|---|---|
| cream (40%) | 80% |
| skimmed milk | 9.42% |
| chocolate aroma | 0.5% |
| sugar | 10% |
| carrageen | 0.08% |

The other steps were the same as in Example 1. After spraying, the overrun of the spray cream was 165%. The spray cream had a full mouth feel and a very good firmness. Moreover, the product had a taste which was experienced as very pleasant. The emptying percentage of the aerosol can was more than 90%.

### Comparative Example 5

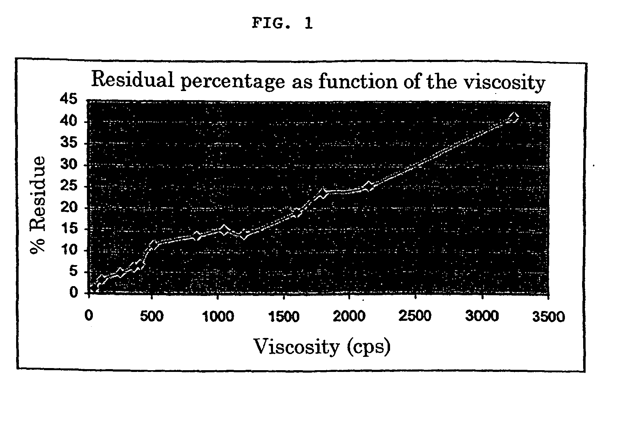

The residual percentage of a spray cream in a conventional aerosol can wherein N₂O was used as propellant and blowing agent, and in an aerosol can according to the invention wherein N₂O was present in both compartments, was determined depending on the viscosity. The viscosity was set by adding a varying amount of starch to the cream composition according to Example 1, such that viscosities of 40, 100, 250, 360, 410, 520, 840, 1050, 1200, 1600, 1800, 2150 and 3230 cP were measured. During the use of the conventional aerosol can, residual percentages were found as shown in Fig. 1. For the aerosol system according to the present invention, up to the value of 1800 cP, a residual percentage of less than 2% was found; from 2150 cP onwards, the residual percentage started to increase.

## Claims

1. An aerosol system with spray cream or an aerated dessert, comprising an aerosol can having at least two compartments A and B, said compartments being gastightly separated from each other by an at least partially movable wall, compartment A containing a propellant and compartment B containing a cream or dessert composition comprising a blowing agent which is at least partially incorporated into said cream or dessert composition, compartment B being provided with a metering valve.

2. An aerosol system according to claim 1, wherein said cream or dessert composition has undergone a destabilizing treatment.

3. An aerosol system according to claim 2, wherein the destabilizing treatment is carried out in such a manner that the sprayed composition has an overrun of at least 80% and less than 300%, preferably less than 200% and a good mouth feel.

4. An aerosol system according to claim 2 or 3, wherein the destabilizing treatment is carried out in such a manner that the sprayed composition maintains a good stand for half an hour at atmospheric pressure and at a temperature of approximately 4-8°C and exhibits a slight serum loss after half an hour.

5. An aerosol system according to any one of the preceding claims, wherein said wall is a piston or is formed by a flexible and/or elastic diaphragm.

6. An aerosol system according to any one of the preceding claims, wherein the amount of blowing agent in compartment B is at the most 1.5 wt.% calculated on the total amount of cream composition, and preferably ranges between 0.1 and 1 wt.%.

7. An aerosol system according to any one of the preceding claims, wherein the blowing agent is selected from the group consisting of CO₂, N₂O and mixtures thereof, optionally in combination with air and/or N₂.

8. An aerosol system according to any one of the preceding claims, wherein the initial pressure in compartment A is at least 6 bar.

9. A method for preparing an aerosol system with spray cream or an aerated dessert, comprising the steps of:
a) preparing a cream or dessert composition comprising at least a fat and non-fat milk constituents, and optionally one or more suitable stabilizers and/or emulsifiers,
b) optionally subjecting said cream or dessert composition to a temperature treatment,
c) homogenizing said cream composition,
d) filling one of the compartments of an aerosol can as defined in any one of claims 1-8 with an appropriate amount of said cream or dessert composition,
e) introducing into the cream or dessert composition a blowing agent in an amount which is at the most 1.5 wt.% of the amount of cream or dessert composition,
f) filling a compartment of said aerosol can other than the compartment mentioned with a propellant;
wherein steps d) + e) and f) can be performed in random order.

10. A method according to claim 9, wherein a cream composition is used which has undergone a destabilizing treatment and which, closed off from the atmosphere, comprises at least milk fat, non-fat milk constituents and a blowing agent in an amount which is at the most 1.5 wt.% of the amount of cream composition.

11. Use of a cream composition as defined in claim 10 in an aerosol system as defined in any one of claims 1-8, for obtaining a stable cream product which at a temperature of approximately 4-8°C and atmospheric pressure has a stand of more than half an hour, an overrun of less than 300%, and preferably less than 200%, exhibits a slight serum loss after half an hour, has a good mouth feel and the spraying percentage being more than 95%.

## Patentansprüche

1. Aerosolsystem mit Sprühsahne oder einem lufthaltigen Dessert, umfassend eine Aerosoldose mit mindestens zwei Kompartimenten A und B, die gasdicht durch mindestens eine teilweise bewegliche Wand voneinander abgetrennt sind, Kompartiment A enthält ein Treibmittel und Kompartiment B enthält eine Sahne- oder Dessertzusammensetzung enthaltend ein Blähmittel, welches zumindest teilweise in die Sahne- oder Dessertzusammensetzung inkorporiert ist, Kompartiment B ist mit einem Dosierventil ausgestattet.

2. Aerosolsystem gemäß Anspruch 1, wobei die Sahne- oder Dessertzusammensetzung einer Destabilisierungsbehandlung unterzogen wurde.

3. Aerosolsystem gemäß Anspruch 2, wobei die Destabilisierungsbehandlung derart durchgeführt wird, daß die gesprühte Zusammensetzung einen Überschuß von mindestens 80 % und weniger als 300 %, bevorzugt weniger als 200 %, und ein gutes Mundgefühl aufweist.

4. Aerosolsystem gemäß Anspruch 2 oder 3, wobei die Destabilisierungsbehandlung derart durchgeführt wird, daß die gesprühte Zusammensetzung einen guten Stand für eine halbe Stunde bei Atmosphärendruck behält und bei einer Temperatur von ca. 4 bis 8°C und einen geringen Serumverlust nach einer halben Stunde aufweist.

5. Aerosolsystem gemäß einem der vorherigen Ansprüche, wobei die Wand ein Kolben ist oder durch eine flexible und/oder elastische Scheidewand gebildet wird.

6. Aerosolsystem gemäß einem der vorherigen Ansprüche, wobei die Menge an Treibmittel in Kompartiment B höchstens 1,5 Gew.%, berechnet auf Grundlage der Gesamtmenge an Sahnezusammensetzung, und bevorzugt in Bereichen zwischen 0,1 und 1 Gew.% liegt.

7. Aerosolsystem gemäß einem der vorherigen Ansprüche, wobei das Treibmittel ausgewählt ist aus CO₂, N₂O und Mischungen davon, gegebenenfalls in Kombination mit Luft und/oder N₂.

8. Aerosolsystem gemäß einem der vorherigen Ansprüche, wobei der anfängliche Druck in Kompartiment A mindestens 6 bar beträgt.

9. Verfahren zur Herstellung eines Aerosolsystems mit Sprühsahne oder einem lufthaltigen Dessert, das folgende Schritte umfaßt:
a) Herstellen einer Sahne- oder Dessertzusammensetzung, die zumindest ein Fett und Milchbestandteile, die kein Fett sind, und wahlweise eine oder mehrere geeignete Stabilisatoren und/oder Emulgatoren umfaßt,
b) gegebenenfalls Wärmebehandeln dieser Sahne- oder Dessertzusammensetzung,
c) Homogenisieren der Sahnezusammensetzung,
d) Befüllen eines Kompartiments der Aerosoldose wie in einem der Ansprüche 1 bis 8 definiert mit einer geeigneten Menge an Sahne- oder Dessertzusammensetzung,
e) Einleiten eines Blähmittels in die Sahne- oder Dessertzusammensetzung in einer Menge, die höchstens 1,5 Gew.% der Menge an Sahne- oder Dessertzusammensetzung entspricht,
f) Befüllen eines Kompartiments der Aerosoldose, das nicht das genannte Kompartiment ist, mit dem Treibmittel;
wobei die Schritte d) + e) und f) in beliebiger Reihenfolge durchgeführt werden können.

10. Verfahren gemäß Anspruch 9, wobei eine Sahnezusammensetzung verwendet wird, die einer Destabilisierungsbehandlung unterzogen wird und die abgeschieden von der Atmosphäre, mindestens Milchfett, Milchbestandteile, die nicht Fett sind, und ein Blähmittel in einer Menge enthalten, die höchstens 1,5 Gew.% der Menge an Sahnezusammensetzung entspricht.

11. Verwendung der Sahnezusammensetzung gemäß Anspruch 10 in einem Aerosolsystem wie in einem der Ansprüche 1 bis 8 definiert, zum Erhalt eines stabilen Sahneprodukts, welches bei Temperaturen von ca. 4 bis 8°C unter Atmosphärendruck mehr als eine halbe Stunde steht, einen Überschuß von weniger als 300 % und bevorzugt von weniger als 200 % aufweist, einen leichten Serumverlust nach einer halben Stunde aufweist, ein gutes Mundgefühl aufweist und der Sprühprozentsatz mehr als 95 % beträgt.

## Revendications

1. Système aérosol avec une crème pulvérisée ou un dessert aéré, comprenant une bombe aérosol ayant au moins deux compartiments A et B, lesdits compartiments étant séparés de manière étanche aux gaz l'un de l'autre par une paroi au moins partiellement mobile, le compartiment A contenant un propulseur et le compartiment B contenant une composition de crème ou de dessert comprenant un agent d'expansion qui est au moins incorporé partiellement dans ladite composition de crème ou de dessert, le compartiment B étant muni d'une valve doseuse.

2. Système aérosol selon la revendication 1, dans lequel ladite composition de crème ou de dessert a été soumise à un traitement déstabilisant.

3. Système aérosol selon la revendication 2, dans lequel le traitement déstabilisant est réalisé de telle manière que la composition pulvérisée présente un foisonnement d'au moins 80 % et inférieur à 300 %, de préférence inférieur à 200 % et une bonne sensation en bouche.

4. Système aérosol selon la revendication 2 ou 3, dans lequel le traitement déstabilisant est réalisé de telle manière que la composition pulvérisée conserve une bonne tenue pendant une demi-heure à pression atmosphérique et à une température d'approximativement 4°C à 8°C et présente une légère perte de sérum après une demi-heure.

5. Système aérosol selon l'une quelconque des revendications précédentes, dans lequel ladite paroi est un piston ou est formée d'un diaphragme souple et/ou élastique.

6. Système aérosol selon l'une quelconque des revendications précédentes, dans lequel la quantité d'agent d'expansion dans le compartiment B est au plus de 1,5 % en poids calculé par rapport à la quantité totale de la composition de crème, et de préférence est comprise entre 0,1 % en poids et 1 % en poids.

7. Système aérosol selon l'une quelconque des revendications précédentes, dans lequel l'agent d'expansion est choisi parmi le groupe consistant en CO₂, N₂O et leurs mélanges, éventuellement en combinaison avec l'air et/ou N₂.

8. Système aérosol selon l'une quelconque des revendications précédentes, dans lequel la pression initiale dans le compartiment A est d'au moins 6 bars.

9. Procédé pour préparer un système aérosol avec une crème pulvérisée ou un dessert aéré, comprenant les étapes consistant à :
a) préparer une composition de crème ou de dessert comprenant au moins un composant de lait gras et de lait écrémé, et éventuellement un ou plusieurs stabilisants et/ou émulsifiants appropriés,
b) soumettre éventuellement ladite composition de crème ou de dessert à un traitement thermique,
c) homogénéiser ladite composition de crème,
d) remplir l'un des compartiments d'une bombe aérosol selon l'une quelconque des revendications 1 à 8 avec une quantité appropriée de ladite composition de crème ou de dessert,
e) introduire dans la composition de crème ou de dessert un agent d'expansion dans une quantité qui est égale au plus à 1,5 % en poids de la quantité de la composition de crème ou de dessert,
f) remplir un compartiment de ladite bombe aérosol autre que le compartiment mentionné avec un propulseur ;
où les étapes d) + e) et f) peuvent être réalisées dans un ordre aléatoire.

10. Procédé selon la revendication 9, dans lequel une composition de crème est utilisée, laquelle a été soumise à un traitement déstabilisant et qui, isolée de l'atmosphère, comprend au moins un composant de lait écrémé, de lait gras et un agent d'expansion dans une quantité qui est égale au plus à 1,5 % poids de la quantité de la composition de crème.

11. Utilisation d'une composition de crème selon la revendication 10 dans un système aérosol selon l'une quelconque des revendications 1 à 8, pour obtenir un produit crémeux stable qui à une température d'approximativement 4°C à 8°C et à pression atmosphérique a une tenue de plus d'une demi-heure, un foisonnement inférieur à 300 %, et de préférence inférieur à 200 %, présente une légère perte de sérum après une demi-heure, a une bonne sensation en bouche et un pourcentage de pulvérisation supérieur à 95 %.
